# EUROPÄISCHE PATENTSCHRIFT

(11) **EP 2 874 808 B1**
(45) Veröffentlichungstag und Bekanntmachung des Hinweises auf die Patenterteilung: **16.11.2016**
(21) Anmeldenummer: 13741693.9
(22) Anmeldetag: 15.07.2013
(51) Int. Cl.: B32B 1/08, C08J 9/00

(54) **VERFAHREN ZUR KONTINUIERLICHEN HERSTELLUNG VON SCHÄUMEN IN ROHREN**
METHOD FOR CONTINUOUS PRODUCTION OF FOAMS IN PIPES
PROCÉDÉ DE FABRICATION CONTINUE DE MOUSSE DANS DES TUYAUX

(30) Priorität: 17.07.2012 EP 12176704
(43) Veröffentlichungstag der Anmeldung: 27.05.2015
(73) Patentinhaber: BASF SE, 67056 Ludwigshafen am Rhein (DE)
(72) Erfinder: GRIESER-SCHMITZ, Christof, 49088 Osnabrück (DE); ELLERSIEK, Carsten, 49525 Lengerich (DE)
(74) Vertreter: BASF IP Association
(86) Internationale Anmeldenummer: PCT/EP2013/064880
(87) Internationale Veröffentlichungsnummer: WO 2014/012877

(56) Entgegenhaltungen:
- EP-A1- 1 400 547
- EP-A2- 1 552 915

## Beschreibung

Die vorliegende Erfindung betrifft ein kontinuierliches Verfahren zur Herstellung eines gedämmten Rohres umfassend wenigstens ein Mediumrohr, ein Mantelrohr, eine Schicht aus wenigstens einem Polyurethan zwischen dem wenigstens einen Mediumrohr und Mantelrohr und einen Folienschlauch zwischen dem wenigstens einen Polyurethan und dem Mantelrohr, umfassend wenigstens die Schritte (A) Bereitstellen wenigstens eines Mediumrohres und eines aus einer Folie kontinuierlich gebildeten Folienschlauches in einem Backenband, wobei das wenigstens eine Mediumrohr innerhalb des Folienschlauches so angeordnet ist, dass zwischen dem we-nigstens einen Mediumrohr und Folienschlauch ein Spalt ausgebildet wird, (B) Einfüllen eines Polyurethansystems umfassend mindestens eine Isocyanatkomponente (a) und mindestens ein Polyol (b) in den Spalt, (C) Aufschäumen und Aushärtenlassen des Polyurethansystems, und (D) Aufbringen einer Schicht aus wenigstens einem Material auf den Folienschlauch, um das Mantelrohr zu bilden, wobei das Polyurethansystem thixotrope Eigenschaften aufweist.

Mit Polyurethanschaumstoffen gedämmte Rohre sind im Stand der Technik bekannt und beispielsweise in EP 1 141 613 B1, EP A 865 893, EP 1 777 051 B1, EP 1 595 904 A2, WO 00/39497, WO 01/18087 A1, EP 2 143 539 A1 und EP 1 428 848 B1 beschrieben. Gedämmte Rohrleitungssysteme werden aus einzelnen Rohrsegmenten zusammengefügt. Standardmäßig werden hierfür Rohrlängen von 6 m, 12 m und 16 m verwendet. Benötigte Überhanglängen werden speziell gefertigt oder aus bestehender Konfektionsware zugeschnitten. Die einzelnen Rohrsegmente werden verschweißt und mit bestehender Muffentechnik im Bereich der Schweißnaht nachgedämmt. Diese Muffenverbindungen bergen ein größeres Schadenspotential als die Rohrware selbst. Dieser Unterschied resultiert aus der Tatsache, dass die Rohrlängen unter festgelegten, kontrollierbaren Bedingungen in Produktionshallen hergestellt werden. Die Muffenverbindungen werden oft unter Zeitdruck bei Wind und Wetter vor Ort auf der Baustelle hergestellt. Einflüsse wie Temperatur, Verschmutzungen und Feuchtigkeit beeinflussen oft die Qualität der Muffenverbindungen. Weiterhin stellt die Zahl der Muffenverbindungen einen großen Kostenfaktor bei der Installation von Rohrleitungssystemen dar.

In der rohrverarbeitenden Industrie ist es daher erstrebenswert, möglichst wenige Muffenver-bindungen, bezogen auf die Länge einer Leitung, zu installieren. Dies wird erreicht durch den Einsatz von längeren Einzelrohrsegmenten, deren Produktion allerdings erhöhte Anforderungen stellt und häufig zu technischen Problemen führt.

Der größte Teil der Einzelrohre wird mit Hilfe der diskontinuierlichen Rohr-in-Rohr Produktion hergestellt. Im Rahmen dieses Verfahrens wird das Mediumrohr, im Allgemeinen aus Stahl, mit sternförmigen Abstandshaltern versehen, die der Zentrierung des inneren Rohres dienen. Das Mediumrohr wird in das äußere Mantelrohr, im Allgemeinen aus Polyethylen, geschoben, so dass sich ein Ringspalt zwischen beiden Rohren ergibt. Dieser Ringspalt wird mit Polyurethanschaum gefüllt, da dieser hervorragende Dämmeigenschaften aufweist. Hierfür wird das leicht geneigte Doppelrohr mit Abschlusskappen versehen, die mit statischen Entlüftungslöchern ausgestattet ist. Anschließend wird in den Ringspalt mittels einer Polyurethandosiermaschine das flüssige Reaktionsgemisch eingefüllt, welches in noch flüssiger Form im Rohrspalt hinunter fließt bis die Reaktion einsetzt. Ab diesem Zeitpunkt findet die weitere Verteilung durch Fließen des langsam in der Viskosität ansteigenden Schaums statt, bis das Material ausreagiert ist.

In der EP 1 552 915 A2 wird ein Verfahren zur Herstellung von gedämmten Rohren offenbart, wobei ein Polyurethansystem enthaltend eine Isocyanatkomponente und eine Polyolkomponente mit einer niedrigen Viskosität von kleiner 3000 mPas in den Ringspalt aus Mediumrohr und Mantelrohr eingefüllt wird. Nach dem Einfüllen schäumt das Polyurethansystem auf und härtet gleichzeitig aus.

Die EP 1 783 152 A2 offenbart ebenfalls ein Verfahren zur Herstellung von gedämmten Rohren, wobei ein Polyurethansystem enthaltend eine Isocyanatkomponente und eine Polyolkomponente mit besonders niedriger Viskosität von weniger als 1300 mPas in den Ringspalt aus Mediumrohr und Mantelrohr eingefüllt wird.

In den Schriften EP 1 552 915 A2 und EP 1 783 152 A2 werden demnach Verfahren beschrieben, um gedämmte Rohre herzustellen, in denen das Problem einer vollständigen Befüllung des Rohres vor Aufschäumen und Aushärten dadurch gelöst wird, dass Polyolkomponenten mit besonders geringer Viskosität und damit einer guten Fließfähigkeit eingesetzt werden. Diese Verfahren sind zwar dazu geeignet, gedämmte Rohre mit Durchmessern von größer 355 mm und/oder hohen Rohdichten herzustellen, zeigen aber die bekannten Nachteile des diskontinuierlichen Verfahrens, wie z.B. personal- und kostenintensive Fertigung und grobere Zellstruktur. Zusätzlich weisen diskontinuierlich gefertigte Rohre einen dickeren Außenmantel auf, da er dem während der Verschäumung entstehenden Innendruck standhalten muss. Dies verursacht einen unerwünschten, höheren Rohstoffeinsatz und damit erhöhte Fertigungskosten.

EP 1 552 915 A2 offenbart Polyurethanschaumstoffe zur Rohrdämmung und ein diskontinuierliches Verfahren zur Herstellung eines gedämmten Rohres.

EP 1 400 547 A1 offenbart 2-Komponenten-Schaumsysteme und ihre Verwendung als Bauschäume. Diese Schäume werden zum Ausschäumen von Öffnungen, Kabel- und Rohrdurchführungen in Wänden, Böden und/oder Decken, von Fugen zwischen Decken- und Wandteilen, zwischen Maueröffnungen und einzubauenden Konstruktionsteilen wie Fenster- und Türstöcken, zwischen Decken und Wänden und zwischen Außenwänden und vorgehängten Fassaden von Gebäuden zum Zwecke der Befestigung, der Wärmeisolation und/oder des Brandschutzes, verwendet.

Weiterhin ist für die Qualität der Rohre eine gleichmäßige Rohdichteverteilung des Schaumstoffes wichtig. Diese ist jedoch bei Einsatz der aus dem Stand der Technik bekannten Verfahren nicht vorteilhaft. Gewöhnlich ergibt sich an den Enden eine niedrigere und in der Mitte des Rohres eine höhere Rohdichte. Je länger das Rohr ist, desto höher wird produktionstechnisch bedingt die erforderliche Gesamtrohdichte des Schaumes im Rohrspalt. Bei aus dem Stand der Technik bekannten kontinuierlichen Verfahren ist es von Nachteil, dass große Mengen Polyurethan-Vorläufer-Mischung kontinuierlich in ein sich bewegendes Doppelrohr aus Mediumrohr und Mantelrohr, welches durch Zusammenführen einer länglichen Folie gebildet wird, eingebracht werden muss. Da unter Umständen diese Mischung nicht schnell genug weggefördert werden kann, kann der Schaum vorne aus dem Rohr herauslaufen.

Des Weiteren ist es mit den aus dem Stand der Technik bekannten kontinuierlichen Verfahren bislang nicht vorteilhaft möglich, gedämmte Rohre herzustellen, die einen Rohrdurchmesser von mehr als 355 mm aufweisen. Bei der Herstellung von gedämmten Rohren mit Rohrdurchmessern von größer als 355 mm mit den aus dem Stand der Technik bekannten Verfahren muss eine große Menge an Polyurethansystem in die Folie eingebracht werden. Aufgrund der niedrigen Viskosität der üblicherweise eingesetzten Polyurethansysteme kann das Polyurethanvorläufer-Gemisch in Verfahren des Standes der Technik vorne aus dem gebildeten Schlauch heraustropfen, und steht somit der eigentlichen Herstellung der gedämmten Rohre nicht mehr zur Verfügung.

Es ist weiterhin problematisch, gedämmte Rohren mit hohen Rohdichten des Polyurethanschaums mit Verfahren Standes der Technik herzustellen. Um hohe Rohdichten zu erzielen, ist es notwendig, eine entsprechend große Menge an Polyurethansystem in den aus einer Folie gebildeten Schlauch einzufüllen. Auch hier kann das eingefüllte Polyurethansystem vorne aus dem Schlauch herauslaufen, und steht somit dem eigentlichen Verfahren nicht mehr zur Verfügung. Die hohen Rohdichten werden für Rohre, die unter Wasser zum Einsatz kommen und dort dem jeweiligen hydrostatischen Druck standhalten müssen, benötigt.

Mit kontinuierlichen Verfahren aus dem Stand der Technik ist es derzeit schwierig, gedämmte Rohre mit zwei oder mehr Mediumrohren herzustellen, die über den gesamten Rohrquerschnitt ein homogenes Schaumbild aufweisen. Ursache hierfür ist beispielweise die unterschiedliche Weglänge des aufsteigenden Schaumes bei der Zuführung von zwei Mediumrohren während der Produktion.

Aufgabe der vorliegenden Erfindung war es, ein kontinuierliches Verfahren zur Herstellung von gedämmten Rohren bereitzustellen, wobei Rohre erhalten werden, welche sich durch eine gleichmäßig verteilte Gesamtrohdichte über die Rohrlänge und eine homogene Schaumstruktur über den Rohrquerschnitt, sowie kleine Zelldurchmesser des enthaltenen PolyurethanSchaumstoffs und damit durch eine geringe Wärmeleitfähigkeit auszeichnen. Des Weiteren ist es eine Aufgabe der vorliegenden Erfindung, ein Verfahren bereitzustellen, durch das es gewährleistet ist, dass das zugeführte Polyurethansystem nicht an einer Seite aus dem gebildeten Rohr herausläuft, sondern vollständig in dem Spalt zwischen dem wenigstens einen Mediumrohr und dem Folienschlauch verbleibt. Es soll auch möglich sein, gedämmte Rohre mit großen Durchmessern und/oder hohen Rohdichten des dämmenden Materials kontinuierlich herzustellen.

Diese Aufgaben werden erfindungsgemäß gelöst durch ein kontinuierliches Verfahren zur Herstellung eines gedämmten Rohres umfassend wenigstens ein Mediumrohr, ein Mantelrohr, eine Schicht aus wenigstens einem Polyurethan zwischen dem wenigstens einen Mediumrohr und Mantelrohr und einen Folienschlauch zwischen dem wenigstens einen Polyurethan und dem Mantelrohr, umfassend wenigstens die Schritte:
(A) Bereitstellen wenigstens eines Mediumrohres und eines aus einer Folie kontinuierlich gebildeten Folienschlauches in einem Backenband, wobei das wenigstens eine Mediumrohr, innerhalb des Folienschlauches so angeordnet ist, dass zwischen dem wenigstens einen Mediumrohr und Folienschlauch ein Spalt ausgebildet wird,
   (A) Einfüllen eines Polyurethansystems umfassend mindestens eine Isocyanatkomponente (a) und mindestens ein Polyol (b) in den Spalt,
   (B) Aufschäumen und Aushärtenlassen des Polyurethansystems, und
   (C) Aufbringen einer Schicht aus wenigstens einem Material auf den Folienschlauch, um das Mantelrohr zu bilden,
   wobei das Polyurethansystem thixotrope Eigenschaften aufweist, und dem Polyurethansystem vor oder während Schritt (B) wenigstens ein Thixotropiermittel zugesetzt wird.

Das erfindungsgemäße Verfahren wird kontinuierlich durchgeführt. Das bedeutet insbesondere, dass jeder einzelne Verfahrensschritt kontinuierlich durchgeführt wird.

Die einzelnen Schritte des erfindungsgemäßen Verfahrens werden im Folgenden detailliert erläutert

### Schritt (A):

Schritt (A) des erfindungsgemäßen Verfahrens umfasst das Bereitstellen wenigstens eines Mediumrohres und eines aus einer Folie kontinuierlich gebildeten Folienschlauches in einem Backenband, wobei das wenigstens eine Mediumrohr innerhalb des Folienschlauches so angeordnet ist, dass zwischen dem wenigstens einen Mediumrohr und Folienschlauch ein Spalt ausgebildet wird.

Erfindungsgemäß liegt wenigstens ein Mediumrohr, bevorzugt ein, zwei, drei oder vier Mediumrohr(e) vor. Besonders bevorzugt liegen erfindungsgemäß ein oder zwei Mediumrohr(e), ganz besonders bevorzugt zwei Mediumrohre, vor.

Das wenigstens eine Mediumrohr, welches erfindungsgemäß einen geringeren Durchmesser aufweist als der Folienschlauch und als das in Schritt (D) des erfindungsgemäßen Verfahrens gebildete Mantelrohr, ist so innerhalb des Mantelrohres angeordnet, dass sich zwischen Mediumrohr und Mantelrohr ein Spalt ausbildet. In diesen Spalt wird in dem erfindungsgemäßen Schritt (B) das Polyurethansystem eingefüllt. Je nachdem, wie viele Mediumrohre erfindungsgemäß vorliegen, weist der gebildete Spalt verschiedene Formen auf. Für den besonders bevorzugten Fall, dass erfindungsgemäß ein Mediumrohr vorliegt, wird ein Ringspalt gebildet. Für die weitere bevorzugte Ausführungsform, dass erfindungsgemäß zwei Mediumrohre vorliegen, wird ein Doppelringspalt gebildet.

Bei dem erfindungsgemäß eingesetzten wenigstens einen Mediumrohr handelt es sich im Allgemeinen um ein Stahlrohr mit einem Außendurchmesser von beispielsweise 1 bis 70 cm, bevorzugt 4 bis 70 cm, besonders bevorzugt 10 bis 70 cm, und ganz besonders bevorzugt 20 bis 70 cm. Liegen mehr als ein Mediumrohre vor, so können diese gleiche oder unterschiedliche Außendurchmesser aufweisen. Bevorzugt weisen alle vorliegenden Mediumrohre den gleichen Durchmesser auf. Die Länge des wenigstens einen Mediumrohres beträgt beispielsweise 3 bis 24 m, bevorzugt 6 bis 16 m. Weiter bevorzugt wird das wenigstens eine Mediumrohr als Rollenware mit einer Länge von beispielsweise 50 bis 1500 m bereitgestellt.

Bei der kontinuierlichen Durchführung des erfindungsgemäßen Verfahrens wird das wenigstens eine Mediumrohr beispielsweise in Form von Rollenware bereitgestellt. Das wenigstens eine Mediumrohr kann auch als Stangenware bereitgestellt werden.

In Schritt (A) des erfindungsgemäßen Verfahrens werden wenigstens ein Mediumrohr und ein aus einer Folie kontinuierlich gebildeter Folienschlauch in einem Backenband bereitgestellt.

Dazu wird bevorzugt eine längliche Folie kontinuierlich von einer Rolle abgewickelt und gegebenenfalls durch dem Fachmann bekannte Verfahren, beispielsweise Schweißen, zu einem Folienschlauch zusammengefügt. Dieses Zusammenführen erfolgt in einer bevorzugten Ausführungsform des erfindungsgemäßen Verfahrens in dem Backenband, in dem auch das wenigstens eine Mediumrohr kontinuierlich zugeführt wird. Die Folie wird dabei bevorzugt über eine Formschulter bzw. Folienschulter zugeführt wird. Es wird bevorzugt ein kreisrunder Folienschlauch gebildet.

Die Folie kann mindestens eine Lage thermoplastischen Kunststoffes, der bevorzugt gegenüber den Zellgasen und Sauerstoff eine diffusionshemmende Wirkung hat, umfassen. Bevorzugt umfasst die Folie zusätzlich mindestens eine Lage aus Metall, z. B. Aluminium. Erfindungsgemäß geeignete Folien sind aus EP 0 960 723 bekannt.

Die erfindungsgemäß eingesetzte Folie weist bevorzugt eine Breite auf, die es erlaubt, einen entsprechenden Folienschlauch zu bilden, der einen Innendurchmesser von im Allgemeinen 6 bis 90 cm, bevorzugt 12 bis 90 cm, besonders bevorzugt 19 bis 90 cm, ganz besonders bevorzugt 35 bis 90 cm, aufweist Diese Folie wird bevorzugt als Rollenware bereitgestellt.

Die erfindungsgemäß eingesetzte Folie kann aus jedem dem Fachmann als geeignet erscheinenden Material gebildet sein, beispielsweise Polyethylen.

Die erfindungsgemäß eingesetzte Folie weist im Allgemeinen jede dem Fachmann als geeignet erscheinende Dicke auf, beispielsweise 5 bis 150 µm.

Ein erfindungsgemäß eingesetztes Backenband ist dem Fachmann an sich bekannt. Dabei handelt es sich im Allgemeinen um zwei Umlaufraupen, die je nach Rohrdimension formgebende Aluminiumbacken tragen. Diese Aluminiumbacken sind beispielsweise Rohrhalbschalen, welche bei ihrem Zusammentreffen den kompletten Rohrquerschnitt bilden. In jeder Umlaufraupe sind beispielsweise bis zu 180 Einzelsegmente eingebaut.

Das wenigstens eine Mediumrohr wird in Schritt (A) des erfindungsgemäßen Verfahrens innerhalb des Folienschlauches so angeordnet, dass zwischen dem wenigstens einen Mediumrohr und Folienschlauch ein Spalt, bei Vorliegen von einem Mediumrohr ein Ringspalt, ausgebildet wird. Dabei ist es besonders bevorzugt, dass das eine Mediumrohr mittig in dem, bevorzugt kreisrunden, Folienschlauch angeordnet ist, so dass ein konzentrischer Ringspalt gebildet wird. Bei mehr als einem Mediumrohr sind diese bevorzugt symmetrisch im Folienschlauch angeordnet.

### Schritt (B):

Schritt (B) des erfindungsgemäßen Verfahrens umfasst das Einfüllen eines Polyurethansystems umfassend mindestens eine Isocyanatkomponente (a) und mindestens ein Polyol (b) in den Spalt, bevorzugt in den Ringspalt.

Zum Einfüllen gemäß Schritt (B) des erfindungsgemäßen Verfahrens kann im Allgemeinen jede dem Fachmann bekannte Vorrichtung, beispielsweise am Markt frei erhältliche Hochdruckdosiermaschinen, beispielsweise der Firmen Hennecke GmbH, Cannon Deutschland GmbH, oder Krauss Maffei Kunststofftechnik GmbH, eingesetzt werden. Erfindungsgemäß ist es auch möglich, dass zum Einfüllen des Polyurethansystems gemäß Schritt (B) des erfindungsgemäßen Verfahrens eine entsprechend dem Radius des gebildeten Spaltes gebogenen Mehrfachdüse verwendet wird.

In Schritt (B) des erfindungsgemäßen Verfahrens wird ein Polyurethansystem eingefüllt, dass thixotrope Eigenschaften aufweist. Dem Fachmann sind die Begriffe "Thixotropie" bzw. thixotrope Eigenschaften" an sich bekannt. Darunter wird erfindungsgemäß verstanden, das das flüssige Reaktionsgemisch unmittelbar nach Verlassen des Mischkopfes aufschäumt ohne dass die eigentlichen Reaktion zwischen Polyol- und Isocyanat-Komponente begonnen hat. Dieses Vorschäumen, beispielsweise vergleichbar mit Rasierschaum, führt dazu, dass das Material formstabil ist und am Ort der Aufbringung verbleibt.

Im Allgemeinen kann in Schritt (B) des erfindungsgemäßen Verfahrens jedes dem Fachmann als geeignet erscheinende Polyurethansystem mit thixotropen Eigenschaften eingesetzt werden. Erfindungsgemäß werden die thixotropen Eigenschaften durch Hinzufügen von entsprechenden Additiven erhalten.

Die vorliegende Erfindung betrifft daher das erfindungsgemäße Verfahren, wobei dem Polyurethansystem vor oder während Schritt (B) wenigstens ein Thixotropiermittel zugesetzt wird.

Geeignete Thixotropiermittel sind beispielsweise ausgewählt aus der Gruppe bestehend aus anorganischen Thixotropiermitteln, beispielsweise Organoschichtsilikate, hydrophobe oder hydrophile pyrogene Kieselsäuren, organischen Thixotropiermitteln, beispielsweise Polyolester, Toluylendiamid (TDA) und Derivate davon, flüssigen Thixotropiermittel auf Basis von Harnstoffurethanen, beispielsweise Isophorondiamin (CAS-Nr. 2855-13-2), 2,2'-dimethyl-4,4'methylenbis(cyclohexylamin) (CAS-Nr. 6864-37-5), Diethyltoluoldiamin (CAS-Nr.- 68479-98-1), Triethylenglykoldiamin (CAS-Nr. 929-59-9), Polyoxypropylendiamin (CAS-Nr. 9046-10-0), und Mischungen davon.

Die vorliegende Erfindung betrifft daher bevorzugt das erfindungsgemäße Verfahren, wobei das wenigstens eine Thixotropiermittel ausgewählt ist aus der Gruppe bestehend aus anorganischen Thixotropiermitteln, beispielsweise Organoschichtsilikate, hydrophobe oder hydrophile pyrogene Kieselsäuren, organischen Thixotropiermitteln, beispielsweise Polyolester, Toluylendiamid (TDA) und Derivate davon, flüssigen Thixotropiermittel auf Basis von Harnstoffurethanen, beispielsweise Isophorondiamin (CAS-Nr. 2855-13-2), 2,2'-Dimethyl-4,4'methylenbis(cyclohexylamin) (CAS-Nr. 6864-37-5), Diethyltoluoldiamin (CAS-Nr.- 68479-98-1), Triethylenglykoldiamin (CAS-Nr. 929-59-9), Polyoxypropylendiamin (CAS-Nr. 9046-10-0), und Mischungen davon.

Das wenigstens eine Thixotropiermittel kann erfindungsgemäß dem Polyurethansystem oder der mindestens einen Isocyanatkomponente (a) oder dem mindestens einen Polyol (b), bevorzugt der mindestens einen Isocyanatkomponente (a) oder dem mindestens einen Polyol (b), zugesetzt werden.

Das erfindungsgemäß vorliegende wenigstens eine Thixotropiermittel wird beispielsweise in einer Menge von 0,1 bis 20 Gew.-%, bevorzugt 0,2 bis 10 Gew.-%, besonders bevorzugt 0,2 bis 7 Gew.%, ganz besonders bevorzugt 0,2 bis 5 Gew.-%. jeweils in Bezug auf die mindestens eine Isocyanatkomponente (a) oder das mindestens eine Polyol (b), zugesetzt.

Erfindungsgemäß einsetzbare bzw. bevorzugt eingesetzte Polyurethansysteme werden im Folgenden detailliert erläutert.

Als Isocyanatkomponente (a) kommen die üblichen aliphatischen, cycloaliphatischen und insbesondere aromatischen Di- und/oder Polyisocyanate zum Einsatz. Bevorzugt verwendet werden Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.

Die Isocyanatkomponente (a) kann auch in Form von Polyisocyanatprepolymeren, eingesetzt werden. Diese Prepolymere sind aus dem Stand der Technik bekannt. Die Herstellung erfolgt auf an sich bekannte Weise, indem vorstehend beschriebene Polyisocyanate (a), beispielsweise bei Temperaturen von etwa 80 °C, mit Verbindungen mit gegenüber Isocyanaten reaktiven Wasserstoffatomen, bevorzugt mit Polyolen, zu Polyisocyanatprepolymeren umgesetzt werde. Das Polyol-Polyisocyanat-Verhältnis wird im Allgemeinen so gewählt, dass der NCO-Gehalt des Prepolymeren 8 bis 25 Gew.-%, vorzugsweise 10 bis 22 Gew.-%, besonders bevorzugt 13 bis 20 Gew.-% beträgt.

Erfindungsgemäß besonders bevorzugt wird als Isocyanatkomponente (a) Roh-MDI eingesetzt.

In einer bevorzugten Ausführungsform wird die Isocyanatkomponente (a) so gewählt, dass sie eine Viskosität von weniger als 800 mPas, bevorzugt von 100 bis 650, besonders bevorzugt von 120 bis 400, insbesondere von 180 bis 350 mPas, gemessen nach DIN 53019 bei 25 °C; aufweist.

Im erfindungsgemäß eingesetzten Polyurethansystem ist das mindestens eine Polyole bevorzugteine Polyolmischung (b), die im Allgemeinen Polyole als Bestandteil (b1), und gegebenenfalls chemische Treibmittel als Bestandteil (b2) enthält. Im Allgemeinen enthält die Polyolmischung (b) physikalische Treibmittel (b3).

Die Viskosität der erfindungsgemäß eingesetzten Polyolmischung (b) (jedoch ohne physikalische Treibmittel (b3)) beträgt im Allgemeinen 200 bis 10000 mPas, bevorzugt 500 bis 9500 mPas, besonders bevorzugt 1000 bis 9000 mPas, ganz besonders bevorzugt 2500 bis 8500 mPas, insbesondere 3100 bis 8000 mPas, jeweils gemessen nach DIN 53019 bei 20 °C. In einer besonders bevorzugten Ausführungsform wird in dem erfindungsgemäßen Verfahren eine Polyolmischung (b) (jedoch ohne physikalische Treibmittel (b3)) eingesetzt, die eine Viskosität von mehr als 3000 mPas, beispielsweise 3100 bis 8000 mPas, jeweils gemessen nach DIN 53019 bei 20 °C, aufweist.

Die vorliegende Erfindung betrifft daher bevorzugt das erfindungsgemäße Verfahren, wobei als mindestens ein Polyol (b) eine Polyolmischung (b) (jedoch ohne physikalische Treibmittel (b3)) eingesetzt wird, die eine Viskosität von mehr als 3000 mPas, beispielsweise 3100 bis 8000 mPas, jeweils gemessen nach DIN 53019 bei 20 °C, aufweist.

Die Polyolmischung (b) enthält im Allgemeinen physikalische Treibmittel (b3). Die Zugabe von physikalischem Treibmittel führt jedoch zu einer signifikanten Absenkung der Viskosität. Daher ist es ein wesentlicher Punkt der Erfindung, dass die oben gemachten Angaben zur Viskosität der Polyolmischung (b), auch für den Fall, dass sie physikalische Treibmittel enthält, sich auf die Viskosität der Polyolmischung (b) ohne Zusatz von physikalischen Treibmitteln (b3) beziehen.

Als Polyole (Bestandteil b1) kommen im Allgemeinen Verbindungen mit mindestens zwei gegenüber Isocyanat reaktiven Gruppen, das heißt mit mindestens zwei mit Isocyanatgruppen reaktiven Wasserstoffatomen, in Betracht. Beispiele hierfür sind Verbindungen mit OH-Gruppen, SH-Gruppen, NH-Gruppen und/oder NH₂-Gruppen.

Als Polyole (Bestandteil b1) kommen bevorzugt Verbindungen auf Basis von Polyesterolen oder Polyetherolen zum Einsatz. Die Funktionalität der Polyetherole und/oder Polyesterole beträgt im Allgemeinen 1,9 bis 8, bevorzugt 2,4 bis 7, besonders bevorzugt 2,9 bis 6.

Die Polyole (b1) weisen eine Hydroxylzahl von im Allgemeinen größer als 100 mg KOH/g, bevorzugt größer als 150 mg KOH/g, besonders bevorzugt größer als 200 mg KOH/g auf. Als Obergrenze der Hydroxylzahl hat sich im Allgemeinen 1000 mg KOH/g, bevorzugt 800 mg KOH/g, besonders 700 mg KOH/g ganz besonders 600 KOH/g bewährt. Die oben angegebenen OH-Zahlen beziehen sich auf die Gesamtheit der Polyole (b1), was nicht ausschließt, dass einzelne Bestandteile der Mischung höhere oder niedrigere Werte aufweisen.

Bevorzugt enthält Komponente (b1) Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 8, vorzugsweise 3 bis 8, reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen Alkohole in Betracht, wie beispielsweise Glycerin, Trimethylolpropan (TMP), Pentaerythrit, Zuckerverbindungen wie beispielsweise Saccharose, Sorbit, sowie Amine, wie beispielsweise Methylamin, Ethylamin, Isopropylamin, Butylamin, Benzylamin, Anilin, Toluidin, Toluoldiamin, Naphthylamin, Ethylendiamin (EDA), Diethylentriamin, 4,4'-Methylendianilin, 1,3,-Propandiamin, 1,6-Hexandiamin, Ethanolamin, Diethanolamin, Triethanolamin und ähnliche.

Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden.

Bevorzugt werden als Startermolekül Glycerin, Saccharose, Sorbit und EDA verwendet.

Die Polyolmischung kann ferner optional als Bestandteil (b2) chemische Treibmittel enthalten. Als chemische Treibmittel sind Wasser oder Carbonsäuren, insbesondere Ameisensäure als chemisches Treibmittel bevorzugt. Das chemische Treibmittel wird im Allgemeinen in einer Menge von 0,1 bis 4 Gew.-%, bevorzugt von 0,2 bis 2,0 Gew.-% und besonders bevorzugt von 0,3 bis 1,5 Gew.-%, jeweils bezogen auf das Gewicht der Komponente (b), eingesetzt.

Wie vorstehend erwähnt, enthält die Polyolmischung (b) im Allgemeinen ein physikalisches Treibmittel (b3). Darunter versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, beispielsweise Cyclopentan, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Diese werden üblicherweise in einer Menge von 1 bis 30 Gew.-%, bevorzugt 2 bis 25 Gew.-%, besonders bevorzugt 3 bis 20 Gew.-%, bezogen auf das Gesamtgewicht der Komponenten (b) eingesetzt.

Die vorliegende Erfindung betrifft daher bevorzugt das erfindungsgemäße Verfahren, wobei das Polyurethansystem mit Pentan, bevorzugt cyclo-Pentan, als physikalischem Treibmittel verschäumt wird.

In einer bevorzugten Ausführungsform enthält die Polyolmischung (b) als Bestandteil (b4) Vernetzer. Unter Vernetzern werden Verbindungen verständen, die ein Molekulargewicht von 60 bis weniger als 400 g/mol aufweisen und mindestens 3 gegenüber Isocyanaten reaktive Wasserstoffatome aufweisen. Ein Beispiel hierfür ist Glycerin.

Die Vernetzer (b4) werden im Allgemeinen in einer Menge von 1 bis 10 Gew.-%, bevorzugt von 2 bis 6 Gew.-%, bezogen auf das Gesamtgewicht der Polyolmischung (b) (jedoch ohne physikalische Treibmittel (b3)), eingesetzt.

In einer weiteren bevorzugten Ausführungsform enthält die Polyolmischung (b) als Bestandteil (b5) Kettenverlängerungsmittel, die der Erhöhung der Vernetzungsdichte dienen. Unter Kettenverlängerungsmitteln werden Verbindungen verstanden, die ein Molekulargewicht von 60 bis weniger als 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol.

Die Kettenverlängerungsmittel (b5) werden im Allgemeinen in einer Menge von 2 bis 20 Gew.-%, bevorzugt von 4 bis 15 Gew.-%, bezogen auf das Gesamtgewicht der Polyolmischung (b) (jedoch ohne physikalische Treibmittel (b3)), eingesetzt.

Die Komponenten (b4) und (b5) können in der Polyolmischung einzeln oder in Kombination eingesetzt werden.

Durch Umsetzung des erfindungsgemäßen Polyurethansystems sind die erfindungsgemäß als Dämmmaterial vorliegenden Polyurethanschaumstoffe erhältlich.

Bei der Umsetzung wird die mindestens eine Isocyanatkomponente (a) und das mindestens eine Polyol (b), bevorzugt die Polyolmischung (b), im Allgemeinen in solchen Mengen zur Umsetzung gebracht, dass die Isocyanat-Kennzahl des Schaums 90 bis 240, bevorzugt 90 bis 200, besonders bevorzugt 95 bis 180, ganz besonders bevorzugt 95 bis 160, insbesondere 100 bis 149, beträgt.

In einer bevorzugten Ausführungsform werden die Komponenten (a) und (b) des Polyurethansystems so gewählt, dass der resultierende Schaumstoff eine Druckfestigkeit (bei Rohdichte 60 kg/m³) von größer 0,2 N/mm², bevorzugt größer 0,25 N/mm², besonders bevorzugt grösser 0,3 N/mm², gemessen nach DIN 53421, aufweist.

Im Allgemeinen beträgt in dem erfindungsgemäßen Verfahren die Gesamteinschussrohdichte mehr als 50 kg/m³, bevorzugt mehr als 60 kg/m³, besonders bevorzugt mehr als 70 kg/m³, ganz besonders bevorzugt mehr als 80 kg/m³, insbesondere mehr als 100 kg/m³. Die obere Grenze der Gesamteinschussrohdichte beträgt bevorzugt jeweils 300 kg/m³. Unter Gesamteinschussrohdichte wird im Allgemeinen die Gesamtmenge an eingefülltem flüssigem Polyurethan-Material bezogen auf das Gesamtvolumen des ausgeschäumten Ringspaltes verstanden.

Das erfindungsgemäße Verfahren kann im Allgemeinen bei jeder dem Fachmann als geeignet erscheinenden Verdichtung erfolgen. Unter Verdichtung versteht man den Quotienten aus der Gesamtfülldichte des Ringspaltes dividiert durch die freigeschäumte Kernrohdichte bestimmt an einem unverdichteten Schaumkörper.

Bevorzugt betrifft die vorliegende Erfindung das erfindungsgemäße Verfahren, wobei die Umsetzung bei einer Verdichtung von kleiner 2,0, bevorzugt kleiner 1,5, besonders bevorzugt kleiner 1,4 und ganz besonders bevorzugt kleiner 1,3 insbesondere kleiner 1,2, durchgeführt wird.

Das in Schritt (B) des erfindungsgemäßen Verfahrens eingesetzte Polyurethansystem enthält bevorzugt mindestens einen Katalysator. Erfindungsgemäß können im Allgemeinen alle dem Fachmann als geeignet erscheinende Katalysatoren eingesetzt werden.

Erfindungsgemäß bevorzugt eingesetzte Katalysatoren katalysieren die Treibreaktion, d. h. die Reaktion von Diisocyanat mit Wasser. Diese Reaktion findet überwiegend vor der eigentlichen Polyurethankettenbildung, d. h. der Polymerisationsreaktion, statt und führt daher zu einem schnellen Reaktionsprofil des Polyurethansystems. Des Weiteren können bevorzugt Katalysatoren eingesetzt werden, die die Polyurethan-Gel-Reaktion bzw. die Trimerisierungsreaktiön des Isocyanates katalysieren.

Beispiele für erfindungsgemäß einsetzbare Katalysatoren sind ausgewählt aus der Gruppe bestehend aus organischen Zinnverbindungen, wie Zinn-(II)-salze von organischen Carbonsäuren, beispielsweise Kaliumacetat, Kaliumformiat und/oder Kaliumoctoat, basischen Aminverbiridungen, wie sekundäre aliphatische Amine, beispielsweise N,N-Dimethylaminoethoxyethanol (CAS-Nummer 1704-62-7), N,N,N',N'-tetramethyl-2,2'oxybis(ethylamin) (CAS-Nummer 3033-62-3), Imidazote, Amidine, Alkanolamine, bevorzugt tertiäre Amine, beispielsweise 2-[[2-(Dimethylamino)ethyl]methylamino]ethanol (CAS-Nummer 2212-32-0), Methylbis(2-dimethylaminoethyl)amin (CAS-Nummer 3030-47-5), Triethylamin, 1,4-Diaza-bicyclo-(2,2,2)-octan, Dimethylbenzylamin, Dimethylcyclohexylamin, (2-Hydroxypropyl)-trimethylammonium-2-ethylhexanoat (CAS-Nummer 62314-22-1), 1-Propanammonium-2-hydroxy-N,N,N-trimethyl-formiat, Trimethylhydroxypropyl-ammoniumformiat, 2-((2-Dimethylamino)ethyl)-methylamino)-ethanol (CAS-Nummer 2212-32-0) und/oder N,N',N"-Tris(dimethylamino-propyl)hexahydrotriazin (CAS-Nummer 15875-13-5), Glycin, N-((2-Hydroxy-5-nonylphenyl)methyl)-N-methyl-mononatrium Salz (CAS-Nummer 56968-08-2), und Mischungen davon.

Die erfindungsgemäß bevorzugten Katalysatoren können dem Polyurethansystem in jeder dem Fachmann bekannten Art zugegeben werden, beispielsweise in Substanz oder als Lösung, beispielsweise als wässrige Lösung.

Bezogen auf die Polyolkomponente (b) wird erfindungsgemäß der mindestens eine Katalysator in einer Menge von 0,01 bis 5 Gew.-%, bevorzugt 0,5 bis 5 Gew.-%, besonders bevorzugt 1 bis 5 Gew.-%, ganz besonders bevorzugt 1,5 bis 5 Gew.-%, insbesondere 2 bis 5 Gew.-% zugegeben.

Dem erfindungsgemäß eingesetzten Polyurethansystem können gegebenenfalls auch noch Zusatzstoffe (b6) zugesetzt werden. Unter Zusatzstoffe (b6) werden die im Stand der Technik bekannten und üblichen Hilfs- und Zusatzstoffe verstanden, jedoch ohne physikalische Treibmittel. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen. Anzumerken ist, dass die oben angegebenen allgemeinen und bevorzugten Viskositätsbereiche der Komponente (b) sich auf eine Polyolmischung (b) inklusive gegebenenfalls zugesetzter Zusatzstoffe (b6) (aber exklusive gegebenenfalls zugesetztem physikalischem Treibmittel (b3)) beziehen.

Die vorliegende Erfindung betrifft daher bevorzugt das erfindungsgemäße Verfahren, wobei die mindestens eine Polyolmischung (b) Polyole (b1), gegebenenfalls chemische Treibmittel (b2), physikalische Treibmittel (b3), Vernetzer (b4), Kettenverlängerungsmittel (b5), Katalysatoren und/oder gegebenenfalls Zusatzstoffe (b6), enthält.

Die vorliegende Erfindung betrifft daher insbesondere das erfindungsgemäße Verfahren, wobei als Zusatzstoff (b6) zwischen 1 und 25 Gew.-% Flammschutzmittel, bezogen auf das Gesamtgewicht der Polyolmischung, eingesetzt wird.

### Schritt (C):

Schritt (C) des erfindungsgemäßen Verfahrens umfasst das Aufschäumen und Aushärtenlassen des Polyurethansystems.

Das Aufschäumen und Aushärten erfolgt erfindungsgemäß im Allgemeinen bei einer Komponententemperatur von 18 bis 40 °C, bevorzugt 18 bis 35 °C, besonders bevorzugt 22 bis 30 °C.

Das Aufschäumen und Aushärten erfolgt erfindungsgemäß im Allgemeinen bei einer Oberflächentemperatur von 15 bis 50 °C, bevorzugt 20 bis 50 °C, besonders bevorzugt 25 bis 45 °C.

Nach Schritt (C) des erfindungsgemäßen Verfahrens wird ein gedämmtes Rohr erhalten mindestens umfassend wenigstens ein Mediumrohr, einen Folienschlauch und eine dämmende Schicht aus Polyurethan-Schaumstoff zwischen wenigstens einem Mediumrohr und Folienschlauch.

Die dämmende Schicht weist im Allgemeinen eine Dicke von 1 bis 20 cm, bevorzugt 3 bis 20 cm, besonders bevorzugt 5 bis 20 cm auf.

In einer weiteren bevorzugten Ausführungsform weist die dämmende Schicht enthaltend Polyurethan-Schaumstoff eine Wärmeleitfähigkeit von weniger als 27 mW/mK, bevorzugt weniger als 26 mW/mK, besonders bevorzugt weniger als 25 mW/mK, ganz besonders bevorzugt weniger als 24 mW/mK, insbesondere weniger als 23 mW/mK, jeweils gemessen nach EN ISO 8497, auf.

### Schritt (D):

Schritt (D) des erfindungsgemäßen Verfahrens umfasst das Aufbringen einer Schicht aus wenigstens einem Material auf den Folienschlauch, um das Mantelrohr zu bilden.

Nach Schritt (C) des erfindungsgemäßen Verfahrens wird wenigstens ein Mediumrohr erhalten, welches von einer dämmenden Schicht aus wenigstens einem Polyurethan-Schaumstoff umgeben ist, welcher wiederum von dem in Schritt (A) erzeugten Folienschlauch umgeben ist. Zur Ausbildung des Mantelrohres aus wenigstens einem Material wird dieses in Schritt (D) des erfindungsgemäßen Verfahrens aufgebracht. Erfindungsgemäß kann im Allgemeinen jedes geeignete Material als Mantelrohr verwendet werden.

In einer weiteren Ausführungsform des erfindungsgemäßen Verfahrens ist das Material, aus dem in Schritt (D) das Mantelrohr gebildet wird, ein thermoplastischer Kunststoff.

Die vorliegende Erfindung betrifft daher bevorzugt das erfindungsgemäße Verfahren, wobei das Material, aus dem in Schritt (D) das Mantelrohr gebildet wird, ein thermoplastischer Kunststoff, insbesondere Polyethylen, ist.

Das Aufbringen von thermoplastischen Kunststoffen kann erfindungsgemäß durch Extrusion erfolgen. Die Extrusion von thermoplastischen Kunststoffen zur Erzeugung einer Schicht, hier das Mantelrohr, ist dem Fachmann an sich bekannt.

Das Aufbringen gemäß Schritt (D) des erfindungsgemäßen Verfahrens wird im Allgemeinen bei einer dem Fachmann für eine Extrusion von thermoplastischen Kunststoffen geeignet erscheinenden Temperatur durchgeführt, beispielsweise oberhalb der Schmelztemperatur des eingesetzten thermoplastischen Kunststoffes. Geeignete Temperaturen sind beispielsweise 180 bis 220 °C, bevorzugt 190 bis 230 °C bzw. 180 bis 230 °C, bevorzugt 190 bis 220 °C.

Das in Schritt (D) des erfindungsgemäßen Verfahrens gebildete Mantelrohr weist im Allgemeinen eine Dicke von 1 bis 30 mm auf. Der Innendurchmesser des Mantelrohrs richtet sich erfindungsgemäß nach dem Durchmesser des Folienschlauches, beispielsweise beträgt er 6 bis 90 cm, bevorzugt 12 bis 90 cm, besonders bevorzugt 19 bis 90 cm.

Das Mantelrohr kann gegebenenfalls aus mehreren Schichten bestehen, die beim Extrusionsvorgang zur Herstellung des Mantelrohres zusammengeführt werden können. Ein Beispiel hierfür ist das Einbringen von mehrlagigen Folien zwischen polyurethan-Schaumstoff und Mantelrohr, wobei die Folie zur Verbesserung der Sperrwirkung mindestens eine metallische Lage enthält. Geeignete Mantelrohre dieses Typs sind in EP-A-960 723 beschrieben. Diese gegebenenfalls vorliegende zusätzliche Schicht wird bevorzugt bereits in Schritt (A) zusammen mit der Folie eingebracht. Beispielsweise können erfindungsgemäß mehrlagige Folien mit Aluminium als Diffusionssperre eingesetzt werden.

Erfindungsgemäß sind im Allgemeinen alle thermoplastischen Kunststoffe geeignet, die für ein entsprechendes gedämmtes Rohr vorteilhafte Eigenschaften aufweisen. Beispiele für erfindungsgemäß einsetzbare thermoplastische Kunststoffe sind ausgewählt aus der Gruppe bestehend aus Polyethylen, Polypropylen und Mischungen davon, bevorzugt wird Polymethylen eingesetzt.

Nach Schritt (D) des erfindungsgemäßen Verfahrens kann das gebildete gedämmte Rohr weiter nach dem Fachmann bekannten Verfahren behandelt werden, beispielsweise durch Zuschneiden des kontinuierlich hergestellten und damit im Prinzip endlosen gedämmten Rohres in gewünschte Längen, beispielsweise 6, 12 oder 16 m.

In einer besonders bevorzugten Ausführungsform handelt es sich bei dem erfindungsgemäß hergestellten gedämmten Rohr um ein gedämmtes Verbundmantelrohr für erdverlegte Fernwärmenetze, welches die Anforderungen von DIN EN 253:2009 erfüllt.

Die vorliegende Erfindung betrifft auch ein gedämmtes Rohr, herstellbar durch das erfindungsgemäße Verfahren. Die bezüglich des erfindungsgemäßen Verfahrens genannten Details des hergestellten gedämmten Rohres gelten entsprechend. Das erfindungsgemäß kontinuierlich hergestellte Rohr zeichnet sich durch eine besonders gleichmäßige Dichteverteilung über die gesamte Länge und resultierend hieraus durch geringe Lambda-Werte bei besseren physikalischen Kennwerten aus. Gleichzeitig weist das erfindungsgemäß hergestellte gedämmte Rohr einen großen Außendurchmesser von beispielsweise 125 bis 920 mm und/oder eine besonders hohe Rohdichte von beispielsweise 50 bis 300 kg/m³, auf.

Die vorliegende Erfindung betrifft auch eine Vorrichtung zur Herstellung eines gedämmten Rohres, umfassend eine Vorrichtung zur Zuführung wenigstens eines Mediumrohres, eine Vorrichtung zur Zuführung einer Folie zur Ausbildung eines Folienschlauches, ein Backenband, eine Vorrichtung zur Bildung eines Mantelrohres und eine Vorrichtung zur Zugabe wenigstens eines Thixotropiermittels, bevorzugt zur Durchführung des erfindungsgemäßen Verfahrens. Eine Vorrichtung zur Zugabe wenigstens eines Thixotropiermittels ist beispielsweise ein Mehrkomponentenmischkopf oder die Zudosierung über einen-Statikmischer in den Hochdruckkreislauf.

Erfindungsgemäß kann das wenigstens eine Thixotropiermittel, wie oben beschrieben, während bzw. kurz vor der Herstellung des Polyurethanschaumstoffs zugesetzt werden. In einer zweiten erfindungsgemäßen Ausführungsform wird das wenigstens eine Thixotropiermittel wenigstens einer der Vorläuferverbindungen bei deren Herstellung zugemischt, an den Ort der Verstellung des Polyurethanschaumstoffs gebracht und dort mit den weiteren Vorläuferverbindungen gemischt.

Die einzelnen genannten Vorrichtungen sind dem Fachmann an sich bekannt. Für die erfindungsgemäße Vorrichtung, bevorzugt zur Durchführung des erfindungsgemäßen Verfahrens, müssen diese an sich bekannten Vorrichtungen erfindungsgemäß angeordnet werden.

Die vorliegende Erfindung betrifft auch die Verwendung der erfindungsgemäßen Vorrichtung zur Durchführung des erfindungsgemäßen Verfahrens, insbesondere zur Herstellung des erfindungsgemäßen gedämmten Rohres.

## Patentansprüche

1. Kontinuierliches Verfahren zur Herstellung eines gedämmten, Rohres umfassend wenigstens ein Mediumrohr, ein Mantelrohr, eine Schicht aus wenigstens einem Polyurethan zwischen dem wenigstens einen Mediumrohr und Mantelrohr und einen Folienschlauch zwischen dem wenigstens einen Polyurethan und dem Mantelrohr, umfassend wenigstens die Schritte:
(A) Bereitstellen wenigstens eines Mediumrohres und eines aus einer Folie kontinuierlich gebildeten Folienschlauches in einem Backenband, wobei das wenigstens eine Mediumrohr innerhalb des Folienschlauches so angeordnet ist, dass zwischen dem wenigstens einen Mediumrohr und Folienschlauch ein Spalt ausgebildet wird,
(B) Einfüllen eines Polyurethansystems umfassend mindestens eine Isocyanatkomponente (a) und mindestens ein Polyol (b) in den Spalt,
(C) Aufschäumen und Aushärtenlassen des Polyurethansystems, und
(D) Aufbringen einer Schicht aus wenigstens einem Material auf den Folienschlauch, um das Mantelrohr zu bilden,
**dadurch gekennzeichnet, dass** das Polyurethansystem thixotrope Eigenschaften aufweist, und dem Polyurethansystem vor oder während Schritt (B) wenigstens ein Thixotropiermittel zugesetzt wird.

2. Verfahren nach Anspruch 1, **dadurch gekennzeichnet, dass** das wenigstens eine Thixotropiermittel ausgewählt ist aus der Gruppe bestehend aus anorganischen Thixotropiermitteln, beispielsweise Organoschichtsilikate, hydrophobe oder hydrophile pyrogene Kieselsäuren, organischen Thixotropiermitteln, beispielsweise Polyolester, Toluylendiamid (TDA) und Derivate davon, flüssigen Thixotropiermittel auf Basis von Harnstoffurethanen, beispielsweise Isophorondiamin (CAS-Nr. 2855-13-2), 2,2'-Dimethyl-4,4'methylenbis(cyclohexylamin) (CAS-Nr. 6864-37-5), Diethyltoluoldiamin (CAS-Nr.-68479-98-1), Triethylenglykoldiamin (CAS-Nr. 929-59-9), Polyoxypropylendiamin (CAS-Nr. 9046-10-0), und Mischungen davon.

3. Verfahren nach Anspruch 1 oder 2, **dadurch gekennzeichnet, dass** das Material, aus dem in Schritt (D) das Mantelrohr gebildet wird, ein thermoplastischer Kunststoff ist.

4. Verfahren nach einem der Ansprüche 1 bis 3, **dadurch gekennzeichnet, dass** die eingesetzte Folie eine Breite aufweist, die es erlaubt, einen entsprechenden Folienschlauch zu bilden, der einen Innendurchmesser von 6 bis 90 cm, bevorzugt 12 bis 90 cm, besonders bevorzugt 19 bis 90 cm, ganz besonders bevorzugt 35 bis 90 cm, aufweist.

5. Verfahren nach einem der Ansprüche 1 bis 4, **dadurch gekennzeichnet, dass** die Gesamteinschussrohdichte mehr als 50 kg/m³, bevorzugt mehr als 60 kg/m³, besonders bevorzugt mehr als 70 kg/m³, ganz besonders bevorzugt mehr als 80 kg/m³, insbesondere mehr als 100 kg/m³, beträgt.

6. Gedämmtes Rohr, herstellbar durch das Verfahren gemäß einem der Ansprüche 1 bis 5.

7. Vorrichtung zur Herstellung eines gedämmten Rohres, umfassend eine Vorrichtung zur Zuführung wenigstens eines Mediumrohres, eine Vorrichtung zur Zuführung einer Folie zur Ausbildung eines Folienschlauches, ein Backenband, eine Vorrichtung zur Bildung eines Mantelrohres und eine Vorrichtung zur Zugabe von wenigstens eines Thixotropiermittels.

8. Verwendung der Vorrichtung gemäß Anspruch 7 zur Durchführung des Verfahrens gemäß einem der Ansprüche 1 bis 5.

9. Verwendung nach Anspruch 8 zur Herstellung des gedämmten Rohres nach Anspruch 6.

## Claims

1. A continuous process for producing an insulated pipe comprising at least one pipe for a medium, an outer pipe, a layer of at least one polyurethane between the at least one pipe for a medium and outer pipe and a film tube between the at least one polyurethane and the outer pipe, which comprises at least the steps:
(A) provision, in a jaw band, of at least one pipe for a medium and a film tube formed continuously from a film, where the at least one pipe for a medium is arranged within the film tube in such a way that a gap is formed between the at least one pipe for a medium and the film tube,
(B) introduction of a polyurethane system comprising at least one isocyanate component (a) and at least one polyol (b) into the gap,
(C) foaming and allowing curing of the polyurethane system and
(D) application of a layer of at least one material to the film tube in order to form the outer pipe,
wherein the polyurethane system has thixotropic properties, and at least one thixotrope is added to the polyurethane system before or during step (B).

2. The process according to claim 1, wherein the at least one thixotrope is selected from the group consisting of inorganic thixotropes, for example organomodified sheet silicates, hydrophobic or hydrophilic pyrogenic silicas, organic thixotropes, for example polyol esters, toluenediamide (TDA) and derivatives thereof, liquid thixotropes based on urea-urethanes, for example isophoronediamine (CAS No. 2855-13-2), 2,2'-dimethyl-4,4'-methylenebis-(cyclohexylamine) (CAS No. 6864-37-5), diethyltoluenediamine (CAS No. 68479-98-1), triethylene glycol diamine (CAS No. 929-59-9), polyoxypropylenediamine (CAS No. 9046-10-0) and mixtures thereof.

3. The process according to claim 1 or 2, wherein the material from which the outer pipe is formed in step (D) is a thermoplastic polymer.

4. The process according to any of claims 1 to 3, wherein the film used has a width which allows a corresponding film tube having an internal diameter of from 6 to 90 cm, preferably from 12 to 90 cm, particularly preferably from 19 to 90 cm, very particularly preferably from 35 to 90 cm, to be formed.

5. The process according to any of claims 1 to 4, wherein the overall injected foam density is more than 50 kg/m³, preferably more than 60 kg/m³, particularly preferably more than 70 kg/m³, very particularly preferably more than 80 kg/m³, in particular more than 100 kg/m³.

6. An insulated pipe which can be produced by the process according to any of claims 1 to 5.

7. An apparatus for producing an insulated pipe, which comprises an apparatus for introduction of at least one pipe for a medium, an apparatus for the introduction of a film for forming a film tube, a jaw band, an apparatus for forming an outer pipe and an apparatus for addition of at least one thixotrope.

8. The use of the apparatus according to claim 7 for carrying out the process according to any of claims 1 to 5.

9. The use according to claim 8 for producing the insulated pipe according to claim 6.

## Revendications

1. Procédé continu de fabrication d'un tube isolé comprenant au moins un tube transporteur de fluide, un tube enveloppe, une couche constituée d'au moins un polyuréthanne entre le ou les tubes transporteurs de fluide et le tube enveloppe, et un film tubulaire entre le ou les polyuréthannes et le tube enveloppe, comprenant au moins les étapes :
(A) mise à disposition d'au moins un tube transporteur de fluide et d'un film tubulaire formé en continu à partir d'une feuille, dans un convoyeur à mâchoires, le ou les tubes transporteurs de fluide étant disposés à l'intérieur du film tubulaire de façon qu'il se forme un espace entre le ou les tubes transporteurs de fluide et le film tubulaire,
(B) remplissage de l'espace avec un système de polyuréthannes comprenant au moins un composant isocyanate (a) et au moins un polyol (b),
(C) expansion et durcissement du système de polyuréthannes, et
(D) application d'une couche en au moins un matériau sur le film tubulaire, pour former le tube enveloppe,
**caractérisé en ce que** le système de polyuréthannes présente des propriétés thixotropiques, et au moins un agent de thixotropisation est ajouté au système de polyuréthannes avant ou pendant l'étape (B).

2. Procédé selon la revendication 1, **caractérisé en ce que** le ou les agents de thixotropisation sont choisis dans le groupe consistant en les agents de thixotropisation inorganiques, par exemple les organophyllosilicates, les silices pyrogènes hydrophobes ou hydrophiles, les agents de thixotropisation organiques, par exemple les esters de polyols, le toluylènediamide (TDA) et les dérivés de celui-ci, les agents de thixotropisation liquides à base d'urée-uréthannes, par exemple l'isophoronediamine (CAS-N° 2855-13-2), la 2,2'-diméthyl-4,4'-méthylènebis(cyclohexylamine) (CAS-N° 6864-37-5), le diéthyltoluènediamine (CAS-N° 68479-98-1), la triéthylèneglycoldiamine (CAS-N° 929-59-9), la polyoxypropylènediamine (CAS-N° 9046-10-0), et les mélanges de ceux-ci.

3. Procédé selon la revendication 1 ou 2, **caractérisé en ce que** le matériau à partir duquel le tube enveloppe est formé dans l'étape (D) est un matériau thermoplastique.

4. Procédé selon l'une des revendications 1 à 3, **caractérisé en ce que** la feuille utilisée présente une largeur qui permet de former un film tubulaire correspondant, qui présente un diamètre intérieur de 6 à 90 cm, de préférence de 12 à 90 cm, d'une manière particulièrement préférée de 19 à 90 cm, d'une manière tout particulièrement préférée de 35 à 90 cm.

5. Procédé selon l'une des revendications 1 à 4, **caractérisé en ce que** la masse volumique apparente totale d'insertion est supérieure à 50 kg/m³, de préférence supérieure à 60 kg/m³, d'une manière particulièrement préférée supérieure à 70 kg/m³, d'une manière tout particulièrement préférée supérieure à 80 kg/m³, en particulier supérieure à 100 kg/m³.

6. Tube isolé, pouvant être fabriqué par un procédé selon l'une des revendications 1 à 5.

7. Dispositif pour la fabrication d'un tube isolé, comprenant un dispositif pour amener au moins un tube transporteur de fluide, un dispositif pour amener une feuille destinée à la formation d'un film tubulaire, un convoyeur à mâchoires, un dispositif pour former un tube enveloppe, et un dispositif pour l'addition d'au moins un agent de thixotropisation.

8. Utilisation du dispositif selon la revendication 7 pour la mise en oeuvre du procédé selon l'une des revendications 1 à 5.

9. Utilisation selon la revendication 8, pour fabriquer le tube isolé selon la revendication 6.
